# FASCICULE DE BREVET EUROPEEN

(11) **EP 3 219 586 B1**
(45) Date de publication et mention de la délivrance du brevet: **09.10.2019**
(21) Numéro de dépôt: 17155281.3
(22) Date de dépôt: 08.02.2017
(51) Int. Cl.: B62D 25/14, B60K 37/00, B60R 13/02, B62D 25/08

(54) **AGENCEMENT POUR LE MAINTIEN EN POSITION D'UNE PLANCHE DE BORD DE VÉHICULE AUTOMOBILE ET VÉHICULE AUTOMOBILE COMPRENANT UN TEL AGENCEMENT**
ANORDNUNG FÜR DIE POSITIONSBEIBEHALTUNG EINES ARMATURENBRETTS EINES KRAFTFAHRZEUGS, UND KRAFTFAHRZEUG, DAS EINE SOLCHE ANORDNUNG UMFASST
ARRANGEMENT FOR KEEPING A DASHBOARD OF A MOTOR VEHICLE IN POSITION AND MOTOR VEHICLE COMPRISING SUCH AN ARRANGEMENT

(30) Priorité: 15.03.2016 FR 1652174
(43) Date de publication de la demande: 20.09.2017
(73) Titulaire: PSA Automobiles SA, 78300 Poissy (FR)
(72) Inventeur: AMIAUT, Hervé, 92500 RUEIL MALMAISON (FR)

(56) Documents cités:
- DE-A1- 19 911 450
- JP-A- 2009 269 521
- US-A1- 2004 108 745

## Description

L'invention se situe dans le domaine des véhicules automobiles présentant des planches de bord et aux agencements pour le maintien en position de telles planches de bord.

La fixation et le maintien en position des planches de bord de véhicules automobiles doit répondre à de nombreuses exigences, telles que par exemple leur étanchéité au bruit comme décrit dans le document FR2992940. Leur montage demande une certaine précision, comme évoqué dans le document EP1939074. Lors du coiffage de la planche de bord, un des problèmes rencontrés est qu'elle puisse coopérer avec l'ensemble des dispositifs et agencements pour sa fixation et son maintien dès la première tentative de mise en place.

Il est aussi connu du document US2004/108745 A1 d'avoir un agencement pour un véhicule automobile qui comprend une traverse de pare-brise et une planche de bord dont un bord avant de la planche de bord est relié à la traverse de pare-brise par au moins une agrafe amovible. Le document JP 2009 269 521 A1 divulgue un agencement selon le préambule de la revendication 1.

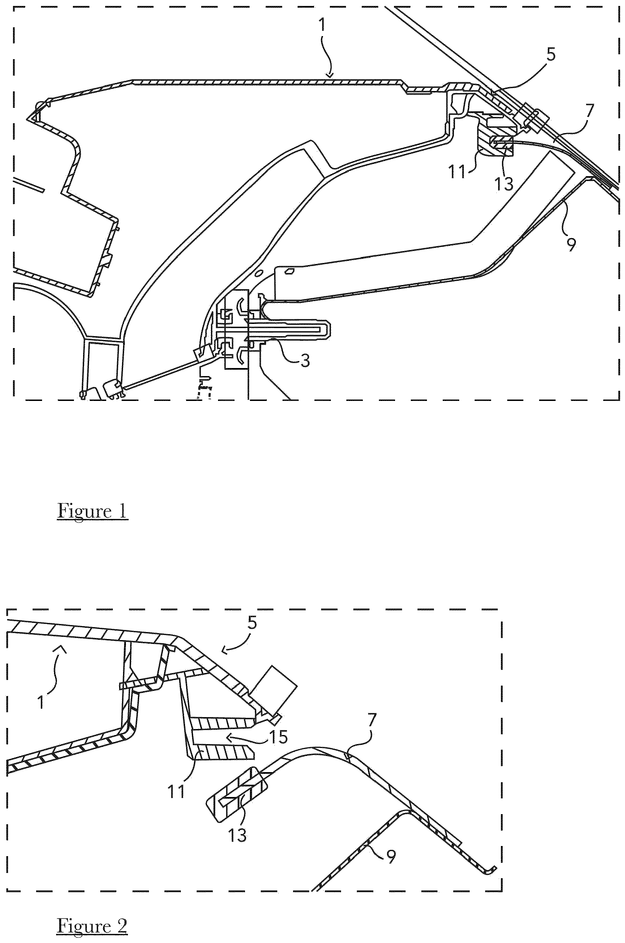

La figure 1 présente une vue partielle en coupe d'une planche de bord 1 d'un véhicule automobile. Lorsqu'elle présente une certaine longueur, la distance entre ses points de fixation 3 sur le tablier et son bord avant 5 (ou « nez de planche ») peut être suffisamment importante pour que ledit bord avant 5 soit susceptible de s'affaisser légèrement, ou du moins ne soit pas positionné correctement selon la hauteur. Il est connu dans ce cas de poser des agrafes 7 de maintien permettant d'assurer le positionnement du bord avant 5 de la planche de bord 1 selon l'axe vertical du véhicule.

Ces agrafes 7 se présentent par exemple sous forme de pattes métalliques souples soudées sur la traverse 9 de baie de pare-brise qui viennent se ficher dans une interface 11 métallique sur le nez 5 de la planche de bord lors de son montage. A cette fin, elles portent une interface de fixation 13 en plastique au niveau l'extrémité destinée à se ficher dans l'avaloir de l'interface 11. Les agrafes 7 doivent être relativement souples afin de pouvoir se casser ou se déformer en cas de choc piéton, en particulier en cas de choc au niveau de la tête d'un adulte.

Les agrafes 7 présentant un certain porte-à-faux, elles sont malheureusement susceptibles de se plier ou de voir le positionnement de leur extrémité destinée à se ficher dans la planche de bord 3, être modifié avant le montage de la planche de bord 1. Ceci peut se produire par exemple au moment du montage des éléments d'insonorisation, ou lorsque le monteur met en place, sur l'extrémité de l'agrafe 7, l'interface de fixation 13 avec la planche de bord sous forme de coiffe en matériau plastique. Lorsque les agrafes 7 sont déformées comme illustré sur la figure 2, elles ne sont plus indexées avec les avaloirs 15 de l'interface 11 et donc ne s'y fichent pas lors du montage de la planche de bord. Il faut donc la démonter pour redresser les agrafes 7 et procéder à nouveau à son coiffage. Cette solution n'est pas acceptable d'un point de vue économique.

Une solution permettant de maintenir le nez de la planche de bord selon l'axe vertical et qui ne risque pas de poser des problèmes lors du montage de la planche de bord reste à trouver. Cette solution doit par ailleurs être compatible avec les exigences du véhicule en matière de choc piéton.

A cet effet, l'invention a pour objet un agencement pour véhicule automobile comprenant une traverse de pare-brise et une planche de bord conformément à la revendication 1.

Selon des modes particuliers de réalisation, l'invention peut comprendre l'une ou l'autre des caractéristiques suivantes prises isolément ou selon toutes les combinaisons possibles :
- La ou les agrafes amovibles présentent un pied destiné à s'insérer dans une glissière ou un logement présentés par les supports d'agrafes, et ladite glissière ou ledit logement sont configurés pour permettre une insertion du pied de l'agrafe selon l'axe longitudinal du véhicule en direction de l'arrière du véhicule.
- La ou les agrafes amovibles présentent un pied destiné à s'insérer dans une glissière ou un logement présentés par les supports d'agrafes, et ladite glissière ou ledit logement sont configurés pour permettre une insertion du pied de l'agrafe selon l'axe transversal du véhicule.
- La ou les agrafes amovibles présentent un pied destiné à s'insérer dans une glissière ou un logement présentés par les supports d'agrafes, et ladite glissière ou ledit logement sont configurés pour maintenir en position l'agrafe selon l'axe vertical.
- Le ou les supports d'agrafe présentent des moyens de positionnement des agrafes amovibles, de préférence ces moyens comprennent une butée ou une encoche de positionnement.
- Le ou les supports d'agrafe sont fixés sur la traverse de pare-brise sous la planche de bord, de préférence à la verticale des interfaces de fixation présentés par la planche de bord.
- La ou les agrafes amovibles sont reliées à la planche de bord par l'intermédiaire d'interfaces de fixation comprenant des avaloirs destinés à recevoir la tête desdites agrafes, de préférence les avaloirs sont configurés pour que les têtes d'agrafes s'y insèrent selon l'axe longitudinal du véhicule en direction de l'arrière du véhicule.
- La ou les agrafes amovibles sont réalisées en matériau composite comprenant une matrice en résine thermoplastique ou thermodurcissable et un renfort en fibres, de préférence le renfort en fibres comprend des fibres de verre et/ou la matrice est sélectionnée dans le groupe comprenant les résines polypropylène, polyamide, polyphtalamide, polyetherethercétone, polysulfure de phénylène, polyamide-imide, polyetherimide, polyarylamide, polyépoxyde, polyester insaturés, vinylester ou polyester-vinylester.
- La ou les agrafes amovibles présentent une zone de résistance mécanique amoindrie, de préférence, la zone de résistance amoindrie présente une épaisseur et/ou une largeur inférieure à l'épaisseur et/ou la largeur du corps de l'agrafe.
- La ou les agrafes sont régulièrement distribuées le long de la traverse de baie selon la direction transversale du véhicule.
- La ou les agrafes présentent une tête, un corps et un pied, de préférence la tête présente une largeur et/ou une épaisseur plus importante que la largeur ou l'épaisseur du corps.

L'invention a également pour objet un véhicule remarquable en ce qu'il comprend un agencement tel que défini ci-dessus.

L'invention a encore pour objet un procédé de montage d'une planche de bord de véhicule automobile comprenant une étape de fixation de la planche de bord à la traverse de baie de pare-brise au moyen d'au moins une agrafe amovible, de préférence coopérant avec un support d'agrafe fixé sur ladite traverse de baie de pare-brise.

Comme on l'aura compris à la lecture de la définition qui vient d'en être donnée, l'invention consiste à maintenir en positon la planche de bord par rapport à la traverse de pare-brise au moyen d'agrafes amovibles les reliant l'une à l'autre. Les agrafes peuvent être mises en place après le montage de la planche de bord, ou avant celui-ci. Pour ce faire, l'invention va préférentiellement associer l'agrafe à un support d'agrafe qui est, quant à lui, fixé de manière permanente à la traverse de pare-brise. De par son caractère amovible, il devient possible d'utiliser des matériaux plastiques ou composites pour réaliser la ou les agrafes. Il est donc possible de donner aux agrafes à la fois un caractère frangible pour répondre aux exigences en termes de choc piéton, tout en étant suffisamment rigides pour ne pas se déformer lors du montage de la planche de bord. Par ailleurs l'emploi de matériaux plastiques ou composites pour réaliser une agrafe fusible permet un meilleur contrôle du mode de rupture de l'agrafe.

L'invention sera bien comprise et d'autres aspects et avantages apparaîtront clairement à la lecture de la description qui suit, donnée à titre d'exemple, en référence aux planches de dessins annexées sur lesquelles :
- les figures 1 et 2 illustrent la problématique pouvant être rencontrée au montage de la planche de bord selon l'art antérieur.
- La figure 3 illustre un premier mode de réalisation de l'invention dans lequel l'agrafe amovible s'insère dans son support selon l'axe longitudinal du véhicule.
- La figure 4 illustre un premier mode de réalisation d'un support d'agrafe selon l'invention.
- La figure 5 illustre un deuxième mode de réalisation de l'invention dans lequel l'agrafe amovible s'insère dans son support selon l'axe transversal du véhicule.

Dans la description qui suit, le terme « comprendre » est synonyme de « inclure » et n'est pas limitatif en ce qu'il autorise la présence d'autres éléments dans le véhicule. Il est entendu que le terme « comprendre » inclut les termes « consister en ».

De même, les termes « inférieur », « supérieur », « avant », « arrière » s'entendront par rapport à l'orientation générale du véhicule.

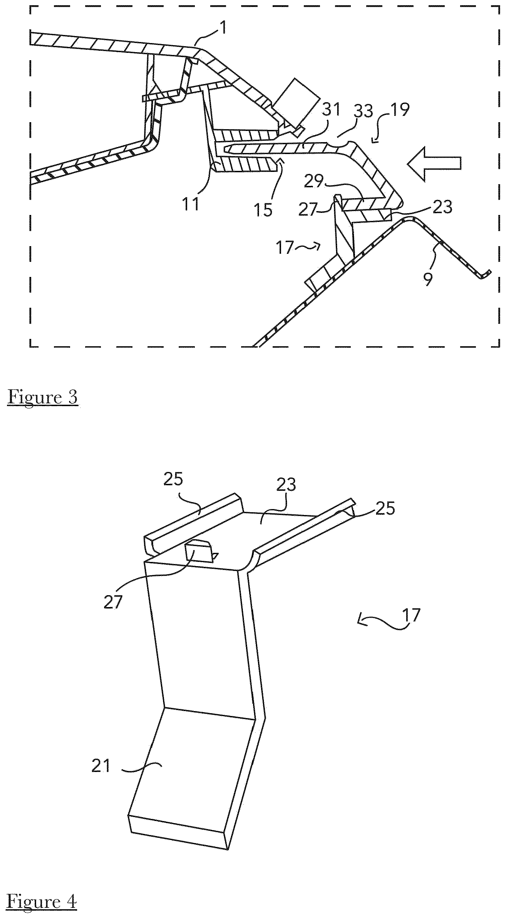

On se référera en premier lieu à la figure 3 montrant un premier mode de réalisation de l'invention.

Comme on peut le voir l'invention va substituer à la patte métallique de l'art antérieur une agrafe 19 amovible. Dans ce mode de réalisation, l'agrafe 19 peut être mise en place après le montage (ou coiffage) de la planche de bord. L'agrafe amovible 19 est avantageusement associée à un support d'agrafe 17. Ce support est préférentiellement métallique et est soudé sur la traverse 9 de baie de pare-brise. La hauteur réduite du support d'agrafe par rapport à l'ensemble formé par l'agrafe et le support d'agrafe associé au fait que le support d'agrafe n'a pas besoin de présenter un caractère frangible, facilite les manipulations d'éléments tels que les éléments d'insonorisation lors du montage du véhicule.

La figure 4 illustre plus particulièrement un mode de réalisation d'un support d'agrafe selon l'invention. Il comprend un pied de fixation 21 pour sa fixation sur la traverse 9 de baie et une glissière 23 destinée à recevoir le pied de l'agrafe amovible 17. La glissière 23 est orientée de façon à ce que le pied de l'agrafe s'y insère selon l'axe longitudinal du véhicule en direction de l'arrière du véhicule. Les ailes 25 de la glissière sont donc parallèles à l'axe longitudinal du véhicule. De préférence, les ailes montrent un retour sur leur bord supérieur (non représenté) qui va permettre de maintenir le pied en position selon l'axe vertical en venant le recouvrir partiellement.

Selon un mode de réalisation préféré, le support d'agrafe présente des moyens de positionnement 27 de l'agrafe, ici sous forme d'une butée 27, qui va limiter la course d'enfoncement du pied de l'agrafe dans la glissière 23. Selon une variante non représentée de l'invention, les moyens de positionnement peuvent s'ajouter ou être confondus à des moyens élastiques de fixation de l'agrafe sur son support. Ainsi par exemple, de manière additionnelle ou alternative, le support peut présenter au niveau de sa glissière une ouverture destinée à coopérer avec des moyens d'encliquetage présents sur le pied de l'agrafe.

En revenant à la figure 3, on peut voir que l'agrafe 19 est mise en place par insertion simultanée de son pied 29 dans la glissière 23 du support 17 fixé sur la traverse de pare-brise et de sa tête 31 dans l'avaloir 15 de l'interface de fixation 11 de la planche de bord 1. A cette fin, le support d'agrafe 17 est préférentiellement disposé à la verticale de l'interface de fixation 11 de la planche de bord 1.

Selon une mise en oeuvre avantageuse de l'invention, l'agrafe 19 peut être réalisée en matériau composite thermoplastique ou thermodurcissable. La fabrication de l'agrafe 19 en matériau thermoplastique peut se faire par exemple par moulage ou tout autre procédé adapté connu de l'homme du métier. Le matériau choisi est préférentiellement composé d'une matrice polymère renforcée par exemple avec des fibres.

Quel que soit le procédé de fabrication choisi, l'homme du métier aura avantage à sélectionner la matrice polymère thermoplastique parmi un ou plusieurs matériaux choisis entre le polypropylène (PP), le polyphtalamide (PPA), le polyetherethercétone (PEEK), polysulfure de phénylène (PPS), le polyamide-imide (PAI), le polyetherimide (PEI), le polyarylamide (PAA), ou le polyamide (PA) tel que par exemple du polyamide 6 (PA 6 ou polycaprolactame) ou du polyamide 6.6 (PA 6.6 ou polyhexaméthylène adipamide).

Les fibres de renforcement peuvent être organiques ou non organiques, et peuvent comprendre des fibres ou un mélange de fibres sélectionnées parmi les fibres de verre, de carbone, de céramique, de graphite, naturelles telles que des fibres de lin, de chanvre ou de bambou, de polymères organiques tels que des fibres de polyester. De préférence les fibres sont des fibres de verre et/ou de carbone.

L'homme du métier choisira sans peine le matériau, les renforts éventuels et l'épaisseur de l'agrafe 19 y compris dans sa zone fusible 33 en fonction de la capacité de résistance et de fusibilité recherchée.

En effet, de manière avantageuse, la ou les agrafes amovibles 19 présentent une zone de résistance mécanique amoindrie formant une zone fusible 33. De préférence, la zone de résistance amoindrie 33 présente une épaisseur et/ou une largeur inférieure à l'épaisseur et/ou la largeur du corps de l'agrafe amovible 19. Elle se présente par exemple sous forme d'au moins une encoche 33 pratiquée sur le corps de l'agrafe 19 entre son pied 29 et sa tête 31.

Cette zone de résistance amoindrie 33 est configurée pour plier ou se rompre sous un effort du type choc piéton.

Lorsque l'agencement comprend plusieurs agrafes, par exemple trois, celles-ci, ainsi que leurs supports respectifs, sont régulièrement distribuées le long de la traverse de baie selon la direction transversale du véhicule.

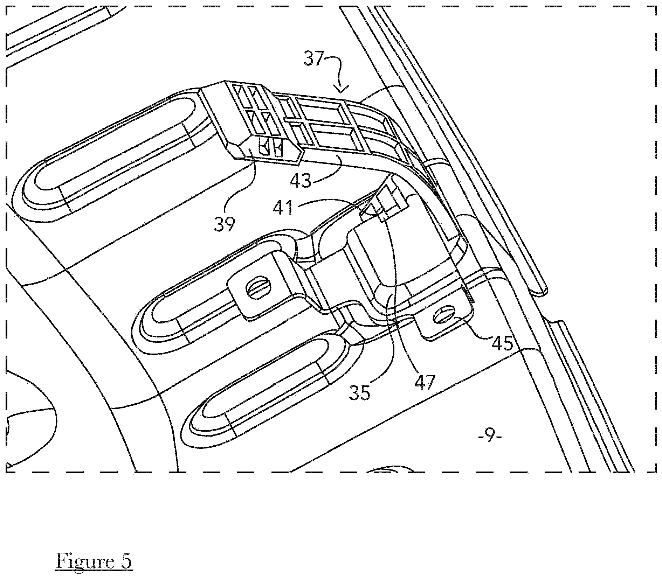

Un deuxième mode de réalisation est illustré à la figure 5. L'invention comprend comme dans le mode de réalisation précédent une agrafe amovible 37 qui va préférentiellement coopérer avec un support d'agrafe 35 métallique soudé sur la traverse de baie de pare-brise 9.

Dans ce mode de réalisation, la fixation du support 35 se fait par le biais de pattes 45 de fixation et le corps du support est surélevé de façon à former avec la traverse de baie 9 un logement dans lequel est destiné à s'insérer le pied de l'agrafe 37. Selon une mise en oeuvre préféré, ce logement est ouvert sur deux côtés afin de permettre une insertion du pied l'agrafe 37 selon l'axe transversal du véhicule.

Dans ce mode de réalisation on notera que le support d'agrafe 35 présente une hauteur encore inférieure à celui du premier mode de réalisation, ce qui permet de diminuer encore d'avantage son encombrement. L'agrafe 37 sera en revanche montée sur son support avant le coiffage de la planche de bord mais après la mise en place d'autres éléments tels que les éléments d'insonorisation. De même, en cas de démontage de la planche de bord, on notera que l'agrafe va rester en place.

Le positionnement ou indexage de l'agrafe 37 selon les axes transversal et longitudinal peut être obtenu par la coopération de nervures 41 à la base du corps 43 de l'agrafe avec au moins une encoche 47 pratiquée dans le support d'agrafe 35.

Avantageusement la tête 39 de l'agrafe 37 présente une largeur et ou une épaisseur plus importante que le corps de l'agrafe 37 pour sa fixation dans l'interface de la planche de bord.

Comme dans l'exemple précédent peut être réalisée en matériau composite thermoplastique ou thermodurcissable. Au besoin, des nervures de renfort sont moulées sur son corps afin d'en améliorer la résistance en dehors de la zone fusible.

## Revendications

1. Agencement pour véhicule automobile comprenant une traverse de pare-brise (9) et une planche de bord (1), le bord avant (5) de la planche de bord (1) étant relié à la traverse de pare-brise (9) par au moins une agrafe amovible (19, 37), la ou les agrafes amovibles (19, 37) étant reliées à la traverse de pare-brise (9) par des supports d'agrafe (17, 35), de préférence lesdits supports d'agrafe (17, 35) sont métalliques et sont soudés à ladite traverse de pare-brise (9), **caractérisé en ce que** la ou les agrafes amovibles (19, 37) comprennent des moyens élastiques destinés à coopérer avec des moyens complémentaires des supports d'agrafe (17, 35) pour la fixation desdites agrafes sur lesdits supports d'agrafe.

2. Agencement selon la revendication 1, **caractérisé en ce que** la ou les agrafes amovibles (19, 37) présentent un pied destiné à s'insérer dans une glissière ou un logement présentés par les supports d'agrafes (17, 35), et **en ce que** ladite glissière ou ledit logement sont configurés pour permettre une insertion du pied de l'agrafe selon l'axe longitudinal du véhicule en direction de l'arrière du véhicule.

3. Agencement selon l'une des revendications 1 ou 2, **caractérisé en ce que** la ou les agrafes amovibles (19, 37) présentent un pied destiné à s'insérer dans une glissière ou un logement présentés par les supports d'agrafes (17, 35), et **en ce que** ladite glissière ou ledit logement sont configurés pour permettre une insertion du pied de l'agrafe selon l'axe transversal du véhicule.

4. Agencement selon l'une des revendications 1 à 3, **caractérisé en ce que** le ou les supports d'agrafe (17, 35) présentent des moyens de positionnement des agrafes amovibles (19, 37), de préférence ces moyens comprennent une butée ou une encoche de positionnement.

5. Agencement selon l'une des revendications 1 à 4, **caractérisé en ce que** la ou les agrafes amovibles (19, 37) sont reliées à la planche de bord par l'intermédiaire d'interfaces de fixation comprenant des avaloirs destinés à recevoir la tête desdites agrafes, de préférence les avaloirs sont configurés pour que les têtes d'agrafes s'y insèrent selon l'axe longitudinal du véhicule en direction de l'arrière du véhicule.

6. Agencement selon l'une des revendications 1 à 5, **caractérisé en ce que** la ou les agrafes amovibles (19, 37) sont réalisées en matériau composite comprenant une matrice en résine thermoplastique ou thermodurcissable et un renfort en fibres, de préférence le renfort en fibres comprend des fibres de verre et/ou la matrice est sélectionnée dans le groupe comprenant les résines polypropylène, polyamide, polyphtalamide, polyetherethercétone, polysulfure de phénylène, polyamide-imide, polyetherimide, polyarylamide, polyépoxyde, polyester insaturés, vinylester ou polyester-vinylester.

7. Agencement selon l'une des revendications 1 à 6, **caractérisé en ce que** la ou les agrafes amovibles (19, 37) présentent une zone de résistance mécanique amoindrie, de préférence, la zone de résistance amoindrie présente une épaisseur et/ou une largeur inférieure à l'épaisseur et/ou la largeur du corps de l'agrafe.

8. Véhicule automobile comprenant un agencement selon l'une des revendications 1 à 7.

## Patentansprüche

1. Anordnung für Kraftfahrzeug, die einen Windschutzscheibenquerträger (9) und ein Armaturenbrett (1) umfasst, wobei der vordere Rand (5) des Armaturenbretts (1) mit dem Windschutzscheibenquerträger (9) durch mindestens eine abnehmbare Klammer (19, 37) verbunden ist, wobei die abnehmbare(n) Klammer(n) (19, 37) mit dem Windschutzscheibenquerträger (9) durch Klammerträger (17, 35) verbunden sind, wobei die Klammerträger (17, 35) vorzugsweise metallisch und an den Windschutzscheibenquerträger (9) geschweißt sind, **dadurch gekennzeichnet, dass** die abnehmbare(n) Klammer(n) (19, 37) elastische Mittel umfassen, die dazu bestimmt sind, mit komplementären Mitteln der Klammerträger (17, 35) für die Befestigung der Klammern auf den Klammerträgern zusammenzuwirken.

2. Anordnung nach Anspruch 1, **dadurch gekennzeichnet, dass** die abnehmbare(n) Klammer(n) (19, 37) einen Fuß aufweisen, der dazu bestimmt ist, sich in eine Gleitschiene oder eine Aufnahme, die die Klammerträger (17, 35) aufweisen, zu fügen, und dass die Gleitschienen oder die Aufnahme konfiguriert sind, um ein Einfügen des Klammerfußes entlang der Längsachse des Fahrzeugs in Richtung der Rückseite des Fahrzeugs zu erlauben.

3. Anordnung nach einem der Ansprüche 1 oder 2, **dadurch gekennzeichnet, dass** die abnehmbare(n) Klammer(n) (19, 37) einen Fuß aufweisen, der dazu bestimmt ist, sich in eine Gleitschiene oder eine Aufnahme, die die Klammerträger (17, 35) aufweisen, zu fügen, und dass die Gleitschiene oder die Aufnahme konfiguriert sind, um ein Einfügen des Klammerfußes entlang der Querachse des Fahrzeugs zu erlauben.

4. Anordnung nach einem der Ansprüche 1 bis 3, **dadurch gekennzeichnet, dass** der oder die Klammerträger (17, 35) Positionierungsmittel der abnehmbaren Klammern (19, 37) aufweisen, wobei diese Mittel vorzugsweise einen Anschlag oder eine Positionierungskerbe umfassen.

5. Anordnung nach einem der Ansprüche 1 bis 4, **dadurch gekennzeichnet, dass** die abnehmbare(n) Klammer(n) (19, 37) mit dem Armaturenbrett über Befestigungsschnittflächen verbunden sind, die Einweiser umfassen, die dazu bestimmt sind, den Kopf der Klammern aufzunehmen, wobei die Einweiser vorzugsweise konfiguriert sind, damit sich die Köpfe der Klammern darin entlang der Längsachse des Fahrzeugs in Richtung der Rückseite des Fahrzeugs einfügen.

6. Anordnung nach einem der Ansprüche 1 bis 5, **dadurch gekennzeichnet, dass** die abnehmbare(n) Klammer(n) (19, 37) aus Verbundmaterial hergestellt sind, das eine Matrix aus Thermoplast- oder wärmehärtbarem Harz und eine Verstärkung aus Fasern umfasst, wobei die Verstärkung aus Fasern vorzugsweise Glasfasern umfasst, und/oder die Matrix aus der Gruppe ausgewählt ist, die die Polypropylen-, Polyamid-, Polyphtalamid-, Polyetheretherketon-, Phenylenpolysulfid-, Polyamid-Imid-, Polyetherimid-, Polyarylamid-, Polyepoxidharze, ungesättigte Polyester, Vinylester oder Polyester-Vinylester umfasst.

7. Anordnung nach einem der Ansprüche 1 bis 6, **dadurch gekennzeichnet, dass** die abnehmbare(n) Klammer(n) (19, 37) eine Zone mit verminderter mechanischer Festigkeit aufweisen, wobei die Zone mit verminderter mechanischer Festigkeit vorzugsweise eine Dicke und/oder eine Breite kleiner als die Dicke und/oder die Breite des Körpers der Klammer aufweist.

8. Kraftfahrzeug, das eine Anordnung nach einem der Ansprüche 1 bis 7 umfasst.

## Claims

1. Arrangement for a motor vehicle comprising a windscreen cross member (9) and a dashboard (1), with the front edge (5) of the dashboard (1) being connected to the windscreen cross member (9) by at least one removable clasp (19, 37), the removable clasp or clasps (19, 37) being connected to the windscreen cross member (9) by clasp supports (17, 35), preferably said clasp supports (17, 35) are metallic and are welded to said windscreen cross member (9), **characterised in that** the removable clasp or clasps (19, 37) comprise elastic means intended to cooperate with complementary means of the clasp supports (17, 35) for the fastening of said clasps onto said clasp supports.

2. Arrangement according to claim 1, **characterised in that** the removable clasp or clasps (19, 37) have a foot intended to be inserted into a slider or a housing presented by the clasp supports (17, 35), and **in that** said slide or said housing are configured to allow for an insertion of the foot of the clasp along the longitudinal axis of the vehicle in the direction of the rear of the vehicle.

3. Arrangement according to any of claims 1 or 2, **characterised in that** the removable clasp or clasps (19, 37) have a foot intended to be inserted into a slider or a housing presented by the clasp supports (17, 35), and **in that** said slide or said housing are configured to allow for an insertion of the foot of the clasp along the transversal axis of the vehicle.

4. Arrangement according to any of claims 1 to 3, **characterised in that** the clasp support or supports (17, 35) have means for positioning removable clasps (19, 37), preferably these means comprise a stop or a positioning notch.

5. Arrangement according to any of claims 1 to 4, **characterised in that** the removable clasp or clasps (19, 37) are connected to the dashboard by the intermediary of fastening interfaces that comprise gullies intended to receive the head of said clasps, preferably the gullies are configured so that the clasp heads are inserted therein along the longitudinal axis of the vehicle in the direction of the rear of the vehicle.

6. Arrangement according to any of claims 1 to 5, **characterised in that** the removable clasp or clasps (19, 37) are made from a composite material that comprises a matrix made of a thermosetting or thermoplastic resin and a fibre reinforcement, preferably the fibre reinforcement comprises glass fibres and/or the matrix is selected from the group comprising polypropylene, polyamide, polyphthalamide, polyetheretherketone, polyphenylene sulfide, polyamide-imide, polyetherimide, polyarylamide, polyepoxide, unsaturated polyester, vinylester or polyester-vinylester resins.

7. Arrangement according to any of claims 1 to 6, **characterised in that** the removable clasp or clasps (19, 37) have a zone with less mechanical resistance, preferably, the zone with less resistance has a thickness and/or a width that is less than the thickness and/or the width of the body of the clasp.

8. Motor vehicle comprising an arrangement according to any of claims 1 to 7.
